# EUROPEAN PATENT APPLICATION

(11) **EP 1 115 052 A2**
(43) Date of publication of application: **11.07.2001**
(21) Application number: 00403593.7
(22) Date of filing: 19.12.2000
(51) Int. Cl.: G06F 1/16

(54) **Storage device in an expansion slot of a computer input device**

(30) Priority: 05.01.2000 US 478301
(71) Applicant: IOMEGA CORPORATION, Roy, UT 84067 (US)
(72) Inventor: Stokes, John R., Pleasant View, Utah 84414 (US); Reynolds, Douglas S., Clinton, Utah 84015 (US)
(74) Representative: Cabinet Hirsch

(57) **Abstract**

A computer system includes a computer input device, an expansion slot in the input device and a magnetic disk storage drive in the expansion slot. A Universal Bus communicates with the input devices and the mini disk drives which are in the same housing.

## Description

The present invention relates to computer systems and more particularly to an input device with a storage device.

### Background of the Invention

Computer systems may include diverse devices. U.S. Patent No. 5,809,520 Edwards, *et al*. shows mini disk drives in different digital devices.

All computer systems have input devices for supplying data to the computer system. A mouse or a track ball such as shown in U.S. Patents 5,669,015 and 5,008,528 are typical devices for providing cursor control. Digital microphones, such as described in U.S. Patents 5,964,850 and 5,828,997, provide the input for word processing and other applications. Electronic tablets such as shown in U.S. Patents 5,977,491 and 5,956,423 can be used to provide input to the computer systems.

Such input devices are frequently used to accomplish repetitive tasks. For example, a keyboard, a mouse, or a track ball is often used for cursor control in filling out the same repetitive forms. In such situations it would be useful to have data stored in the input device so that the manual repetition of data input could be simplified.

The Universal Serial Bus follows a protocol defined in the Universal Serial Bus Specification (USB Spec). The USB Spec provides a standardized approach for peripheral interconnections with a host computer. The USB is set up in a tiered topology with a host on the top tier and USB hubs and functions on subsequent tiers. Each USB device, whether it be a hub or a function, has associated therewith a serial interface engine (SIE) which provides an interface between the hub or function and the transceiver which transmits or receives signals across the serial line. Generally, the SIE takes care of all the USB low level protocol matters such as bit stuffing, cycle redundancy checks (CRCs), token generation, and handshaking.

The IEEE 1394-1995 standard was adopted on Dec. 12, 1995 by the Institute of Electrical and Electronic Engineers, 345 East 47^{th} Street, New York, NY. 10017-2394. A copy of that standard is available from the IEEE. The standard is widely known in the industry of digital video, particularly since IEEE-1394-1995, also known as Fire Wire™ (trademark of Apple Computer, Inc., Cupertino, California 95014), has been adopted as the standard for connecting digital video cameras and other digital video devices in the consumer and professional markets. The contents of that standard are incorporated herein by reference (IEEE 1394 Specification).

In all computing systems, desk top space is at a premium. It is an object of the present invention to use the foregoing technology to alleviate desk top "clutter", by including storage devices such as disk drives in the same housing as the input device. In accordance with the present invention this is possible using the foregoing USB , IEEE 1394-1995 and/or Fire Wire™ technology which is collectively referred to herein as a "Universal Bus".

### Summary of the Invention

In accordance with the present invention a storage device such as a mini disk drive is provided in an input device such as a mouse, keyboard, electronic tablet, trackball or digital microphone. Further in accordance with the invention, the disk drive may be disposed in an expansion slot in the input device. The input device and the disk drive may be connected to the host computer through a Universal Bus.

The foregoing and other objects, features of the advantages will be better understood from the following more detailed description and appended claims.

### Short Description of the Drawings

Figure 1 shows a computer system with input devices having an expansion slot with a storage device therein;
Figure 2 shows a disk drive storage device useable in accordance with the present invention;
Figure 3 shows a notebook computer system with input devices having a storage device in accordance with the present invention; and
Figure 4 shows a trackball with an expansion slot into which a storage device is disposed in accordance with the present invention; and
Figure 5 shows the present invention in a universal bus computer system.

### Detailed Description of the Invention

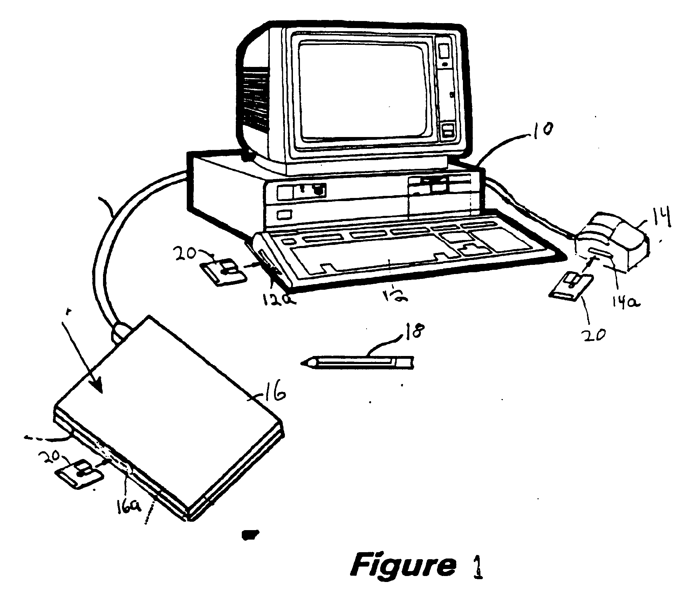

The computer system shown in Figure 1 includes a computer 10 and several input devices including keyboard 12, mouse 14, and electronic tablet 16. In accordance with the present invention each of these input devices has an expansion slot 12a, 14a, and 16a.

In accordance with the present invention a mini drive 20 is disposed in the expansion slot of one or more of the input devices. Mini drive 20 writes signals to a magnetic recording medium and reads signals from the magnetic recording medium so that these signals can be stored and later retrieved. The mini drive 20 disposed in the expansion slot 12a of the keyboard 12 is used to record keystrokes which are frequently used by the operator of the computer system. By recording these key strokes, they can be repetitively used as for example in the preparation of the forms which are repetitively filled out by the operator. Similarly, the mini disk drive 20 in the expansion slot 14a of the mouse 14 records cursor control signals which are repetitively used by the operator. Electronic tablet 16 and stylulus 18 have a mini storage drive in the expansion slot 16a so that electronic signals which are inputed by the electronic tablet can be stored and repetitively used.

In the preferred embodiment mini drives 20 have a PCMCIA type 3 form factor. This form factor is commonly used in portable personal computers. THE PCMCIA type 3 form factor is sufficiently small that the mini drive 20 readily fits into all of the input devices shown in Figure 1.

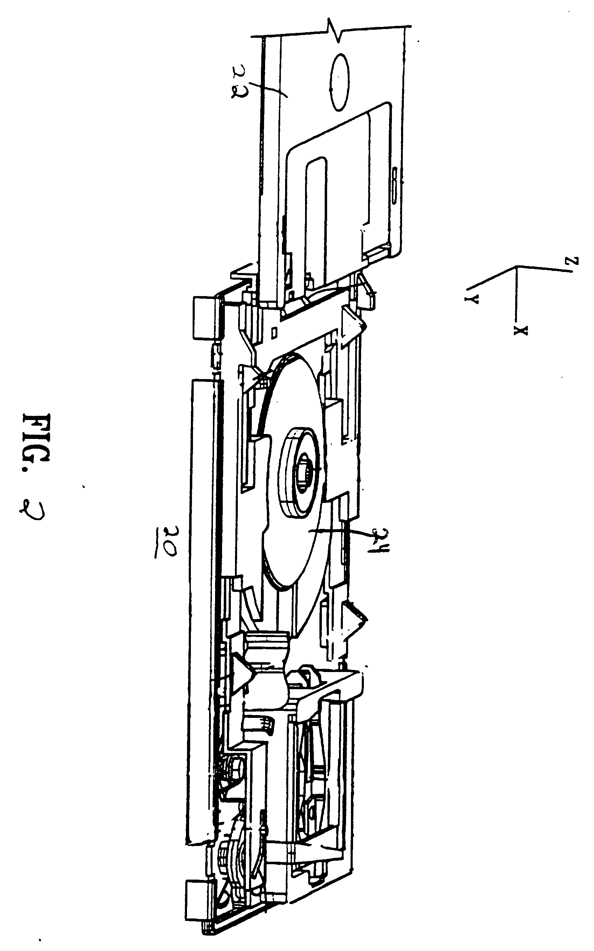

Figure 2 shows a mini disk drive 20 with a cartridge 22 which is suitable for use in the present invention. Such mini drives are commonly referred to as clik!™ drives available from Iomega Corporation, assignee of the present application. Such drives include a spindle motor 24 which rotates a magnetic disk in the cartridge 22. The cartridge contains a magnetic recording disk which magnetically records signals from the input device. The mini storage drive of Figure 2 is more fully described in U.S. Patent 5, 809,520, Edwards *et al.* and in U.S. Patents 5,969,916, Schick, *et al.*, 5,943,185, Bracken, *et al*. and in other patents and applications relating to the clik!™ drive.

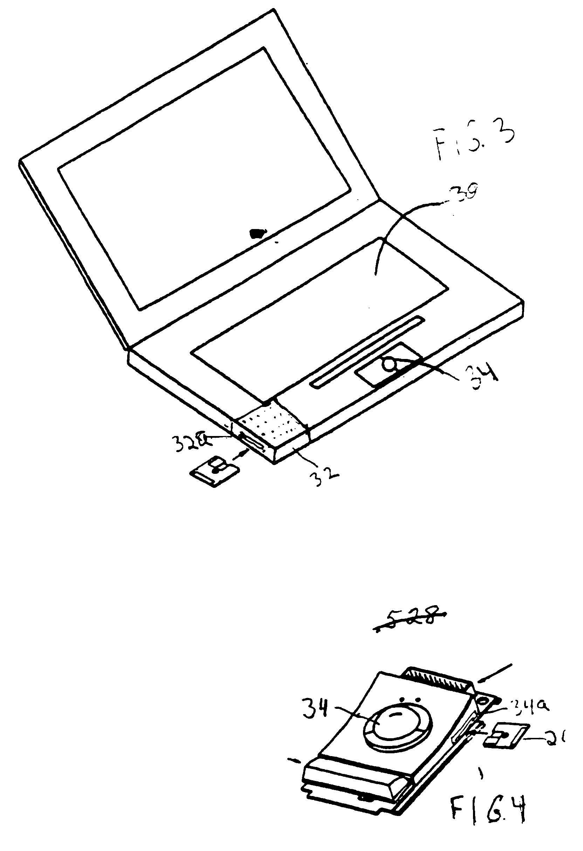

Figure 3 shows a notebook type computer system which includes a keyboard 30, a digital microphone 32 and trackball 34. The digital microphone has an expansion slot 32a and the trackball 34 has an expansion shot 34a. Mini disk drives 20 are disposed in each of these expansion slots. Figure 4 shows the trackball 34 with an expansion slot 34a and a mini-drive 20 disposed in the expansion slot.

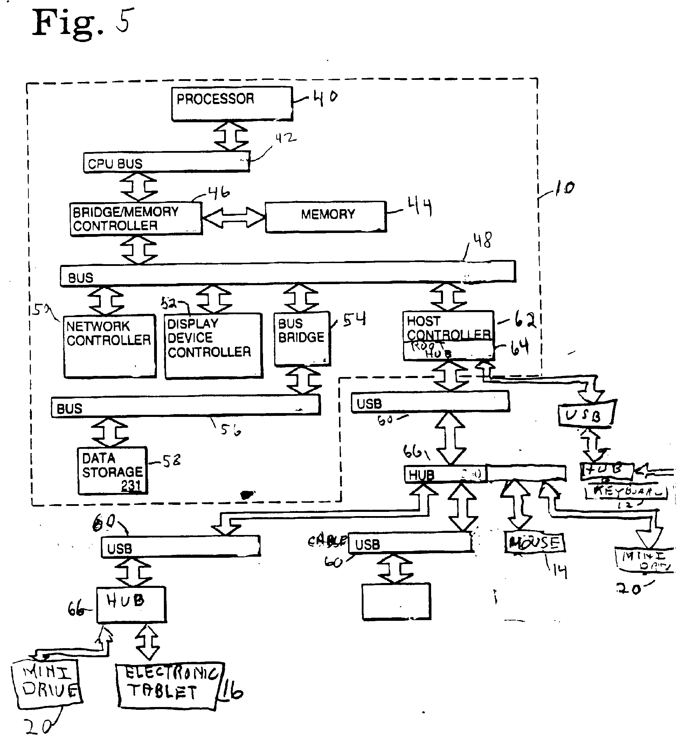

Figure 5 shows the input devices and mini-drives of Figure 1 configured in a universal bus system such as that shown in U.S. Patent 5,890,015. An exemplary computer system 10 operates as USB host. The USB host 10 comprises a processor 40 that processes digital data. The processor 40 can be a complex instruction set computing (CISC) microprocessor, a reduced instruction set computing (RISC) microprocessor, a very long instruction word (VLIW) microprocessor, a processor implementing a combination of instruction sets, or other processor devices. The processor 40 is coupled to a CPU bus 42 which transmits signals between the processor 40 and other components in the USB host 10.

For the illustrated embodiment, a memory 44 comprises a dynamic random access memory (DRAM) device, a static random access memory (SRAM) device, or other memory devices. The memory 44 stores information or other intermediate data during execution by the processor 40. A bridge memory controller 46 is coupled to the CPU bus 42 and the memory 44. The bridge memory controller 46 directs data traffic between the processor 40, the memory 44, and the other components in the USB host 10 and bridges signals from these components to a high speed I/O bus 48.

For the illustrated embodiment, the high speed I/O bus 48 supports peripherals operating at high data throughput rates. The bus 48 can be a single bus or a combination of multiple buses. As an example, the bus 48 can comprise a Peripheral Components Interconnect (PCI) bus, a Personal Computer Memory Card International Association (PCMICA) bus, or other buses. The bus 48 provides communication links between components in the USB host. 10. A network controller 50 links a network of computers together and provides communication among the machines. A display device controller 52 is coupled in the high speed I/O bus 48. The display device controller 52 allows coupling of a display device to the computer system and acts as an interface between the display device and the USB host 10. The display device receives information and data from the processor 40 through the display device controller 52 and displays the information and data to the user of the USB host.

In the illustrated embodiment, a bus bridge 54 couples the high speed I/O bus 48 to I/O bus 46. The bus bridge 54 comprises a translator for bridge signals between the high speed I/O bus 48 and the I/O bus 56. The I/O bus 56 is used for communicating information between peripheral devices that operate at lower throughput rates. The I/O bus 56 can be a single bus or a combination of multiple buses. As an example, the bus 56 can comprise an Industry Standard Architecture (ISA) bus, an Extended Industry Standard Architecture (EISA) bus or a Micro Channel Architecture (MCA) bus. The bus 56 provides communication links between components in the computer system. A data storage device 58 can be a hard disk drive, a floppy disk drive, a CD-ROM device, a flash memory device or other mass storage device.

USB 60 is a cable bus that supports data exchange between the USB host 10 and a wide range of simultaneously accessible peripherals or USB devices. Host controller 62 interfaces the USB host 10 with the USB 60. The host controller 62 performs several duties. The host controller 62 reports and manages the states of the controller reports and manages the states of the USB 60. For data transmitted from the USB host 10, the host controller 62 converts protocol and data information from its native format to a bit stream transmitted on the USB 10. For data received into the host, the host controller 62 converts the bit stream of protocol and data information on the USB to the host's native format. The host controller 62 partitions USB time by issuing Start of Frame (SOF) tokens. The host controller 62 processes requests for data transmission to and from the USB host 10 and supports the protocol specified by the USB 60. The host controller 60 also detects and handles transmission errors. A USB root hub 64 is coupled through the USB 60 to another USB hub 66. The USB hubs 64 and 66 are devices that operate to provide additional connections to the host 10. The USB hubs include a repeater unit that manages connectivity on a per packet basis and a hub controller that provides status and control and permits host access to the USB hub 66.

The USB specification imposes a round trip response time delay for transmissions between the host controller and a USB device connected onto the USB. Referring to Fig. 5, the keyboard 12, mouse 14, electronic tablet 16, and associated disk drives 20 must receive a transmission from the host controller 62 and send an acknowledgment of the transmission back to the host controller 62 within the specified round trip response time delay of 18 bit times.

In accordance with the present invention, the Universal Bus System provides the capability for a peripheral device to have a storage device associated therewith. The alternative is for the storage device to connect to the host through a direct interface through its own processor. Various modifications may be made. The appended claims are, therefore, intended to cover all such modifications within the true spirit and scope of the invention.

## Claims

1. A computer system comprising:
a computer input device;
an expansion slot in said input device; and
a storage device in said expansion slot.

2. The computer system recited in claim 1 wherein said storage device is a mini disk drive.

3. The computer system recited in claim 1 wherein said input device is a mouse.

4. The computer system recited in claim 1 wherein said input device is a keyboard.

5. The computer system recited in claim 1 wherein said input device is a track ball.

6. The computer system recited in claim 1 wherein said input device is an electronic tablet.

7. The computer system recited in claim 1 wherein said input device is a digital microphone.

8. A computer system comprising:
a computer having a universal bus communicating with peripheral devices, said bus including at least one hub for receiving/transmitting input/output signals to a peripheral or to another hub;
a computer input device connected to said computer through said universal hub;
a storage device in at least one of the said input devices; said storage device being connected to said computer through said hub.

9. The computer system recited in claim 8 wherein said storage device is a mini disk drive.

10. The computer system recited in claim 8 wherein said peripheral device is a mouse.

11. The computer system recited in claim 8 wherein said peripheral is a keyboard..

12. The computer system recited in claim 8 wherein said peripheral device is a trackball.

13. The computer system recited in claim 8 wherein said peripheral device is an electronic tablet.

14. The computer system recited in claim 8 wherein said peripheral device is a digital microphone.

15. The computer system recited in claim 8 wherein said peripheral device is an input device.

16. The computer system recited in claims 10 wherein said storage device records cursor control signals from said input device.

17. The computer system recited in claims 12 wherein said storage device records cursor control signals from said input device.

18. The computer system recited in claim 1 whreein said storage device records keystrokes from said keyboard.
